# EUROPÄISCHE PATENTANMELDUNG

(11) **EP 3 323 574 A1**
(43) Veröffentlichungstag der Anmeldung: **23.05.2018**
(21) Anmeldenummer: 17198479.2
(22) Anmeldetag: 26.10.2017
(51) Int. Cl.: B27M 3/00, B32B 7/00, B32B 7/12, B32B 21/13, B32B 1/04, B32B 3/18, E04C 2/12

(54) **HOLZPLATTE**

(30) Priorität: 16.11.2016 DE 202016007023 U
(71) Anmelder: Hundegger, Hans, 87749 Hawangen (DE)
(72) Erfinder: Hundegger, Hans, 87749 Hawangen (DE)
(74) Vertreter: Charrier Rapp & Liebau

(57) **Zusammenfassung**

Die Erfindung betrifft eine Brettsperrholzplatte mit einer ersten Decklage, einer zweiten Decklage und mindestens einer dazwischen angeordneten Mittellage, wobei die Decklagen jeweils aus Brettlagen mit einer Mehrzahl von in einer Querrichtung (Q) nebeneinander angeordneten und in einer Längsrichtung (L) verlaufenden Längsbrettern (1) und mindestens eine Mittellage (3q) durch quer oder schräg zur Längsrichtung (L) verlaufende Querbretter (q) gebildet sind. Erfindungsgemäß setzen sich die Längsbretter (1) der ersten Decklage (1) und der zweiten Decklage (2) jeweils aus mehreren, in Längsrichtung (L) verlaufenden Brettabschnitten (11, 12, 13) zusammen, wobei benachbarte Brettabschnitte (11, 12; 12, 13) an ihren Stirnkanten im Stumpfstoß (S) aneinander liegen und die Stumpfstöße (S) von in Querrichtung (Q) nebeneinander angeordneten Längsbrettern (1) in Längsrichtung (L) versetzt zueinander angeordnet sind.

## Beschreibung

Die Erfindung betrifft eine Brettsperrholzplatte nach dem Oberbegriff des Anspruchs 1.

Aus dem Stand der Technik sind Brettsperrhölzer bekannt, die aus kreuzweise über einander gelegten Brettlagen zusammengesetzt sind, wobei die einzelnen Brettlagen jeweils aus einer Mehrzahl von parallel zueinander angeordneten Brettern gebildet sind und die Bretter von benachbart übereinanderliegenden Brettlagen miteinander verbunden, insbesondere verleimt sind. Durch die kreuzweise Verlegung der übereinander angeordneten Brettlagen wird eine hohe Formstabilität und Biegesteifigkeit erzielt. Zur Herstellung von großflächigen Bauplatten aus solchen Brettsperrhölzern werden mindestens drei Brettlagen kreuzweise aufeinandergelegt und miteinander verleimt, wobei zwei außen liegende Decklagen aus Längsbrettern und mindestens eine zwischen den Decklagen angeordnete Mittellage aus Querbrettern ausgebildet wird. Bei einer solchen dreilagigen Brettsperrholzplatte ist die Mittellage aus quer zu den Längsbrettern der Decklagen liegenden und nebeneinander angeordnete Querbrettern gebildet. Es ist auch möglich, mehr als eine Mittellage zwischen den beiden Decklagen vorzusehen, wobei die mehreren Mittellagen durch abwechselnd übereinander angeordnete Längs- und Querlagen von Holzbrettern gebildet werden.

Aus der DE 20 2013 006 624 U1 ist beispielsweise eine Brettsperrholzplatte aus Keilbohlen bekannt, wobei eine oder mehrere Lagen des Brettsperrholzes aus keilförmigen Zuschnitten (Keilbohlen) hergestellt sind. In Längsrichtung können die keilförmigen Zuschnitte, welche die Längsbretter einer Lage der Brettsperrholzplatte ausbilden, keilgezinkt sein.

Um Brettsperrholzplatten mit einer Länge herstellen zu können, die über die Länge der üblicherweise verfügbaren Holzbretter von bspw. 6m hinausgeht, können zur Ausbildung von Längsbrettern mehrere Brettabschnitte verwendet werden, die an ihren Stirnkanten durch eine Keilzinkenverbindung miteinander verbunden werden. Durch die Keilzinkenverbindung wird eine hohe Stabilität der aus den Brettabschnitten gebildeten Längsbretter erzielt, die nahezu der Stabilität eines durchgehenden Längsbretts entspricht. Auf diese Weise können Brettsperrholzplatten mit einer Länge gefertigt werden, die weit über die Längen der üblicherweise verfügbaren Holzbretter hinausgeht. Die üblicherweise verfügbaren Längen von Holzbrettern, wie z.B. Massivholzbretter aus Schnittholz nach DIN 68252 bzw. DIN 4074 (Bauschnittholz), liegen typischerweise bei 3 bis 6 m bei Dicken zwischen 8mm und 40 mm und Breiten von mehr als 80 mm. Für den Einsatz im Baubereich werden jedoch Bauplatten mit einer wesentlich größeren Länge benötigt, beispielsweise zur Herstellung von Außen- oder Innenwänden oder für Deckenelemente im Hausbau.

Die Herstellung von langen Längsbrettern durch Verbindung von Brettabschnitten an ihren Stirnkanten über eine Keilzinkenverbindung ist jedoch technisch aufwendig und erfordert den Einsatz geeigneter Maschinen (Keilzinkenanlagen) zur Herstellung der Keilzinkenverbindungen. Die Keilzinkenverbindungen erzielen zwar eine Stabilität der Längsbretter, die mit der Stabilität von durchgehenden Längsbrettern vergleichbar ist. Allerdings ist in vielen Anwendungen im Baubereich, beispielsweise für die Herstellung von nicht tragenden Innenwänden, eine hohe Biegesteifigkeit gar nicht erforderlich. Es besteht daher ein Bedarf an einfach und günstig herstellbaren Brettsperrholzplatten, welche nicht über die Stabilität und Biegesteifigkeit der bekannten Brettsperrholzplatten verfügen, jedoch eine große Länge aufweisen, so dass sie für die Anwendung im Baubereich, bspw. zur Herstellung nichttragender Wände, eingesetzt werden können.

Hiervon ausgehend liegt der Erfindung die Aufgabe zugrunde, derartige Platten aus Brettsperrhölzern zur Verfügung zu stellen.

Diese Aufgabe wird mit der Brettsperrholzplatte mit den Merkmalen des Anspruchs 1 gelöst. Bevorzugte Ausführungsformen dieser Brettsperrholzplatte sind den abhängigen Ansprüchen zu entnehmen.

Die Brettsperrholzplatte gemäß der Erfindung weist eine erste und eine zweite Decklage und mindestens eine dazwischen angeordnete Mittellage auf, wobei die Decklagen jeweils aus Brettlagen mit einer Mehrzahl von in einer Querrichtung nebeneinander angeordneten und in einer Längsrichtung verlaufenden Längsbrettern und mindestens eine der Mittellagen durch quer oder schräg zur Längsrichtung verlaufende Querbretter gebildet sind. Zur Ausbildung von Brettsperrholzplatten mit einer Länge (Ausdehnung in Längsrichtung), die über die Länge der üblicherweise verfügbaren Holzbretter (Schnitthözer) hinausgeht, ist dabei vorgesehen, dass sich zumindest die Längsbretter der Decklagen und, wenn vorhanden, zweckmäßig auch die Längsbretter der aus Längsbrettern gebildeten Mittellagen, jeweils aus mehreren in Längsrichtung verlaufende Brettabschnitte zusammensetzen, wobei benachbarte Brettabschnitte an ihren Stirnkanten im Stumpfstoß aneinander liegen und die Stumpfstöße von in Querrichtung nebeneinander angeordneten Längsbrettern in Längsrichtung versetzt zueinander angeordnet sind.

Gegenüber den aus dem Stand der Technik bekannten Längsbrettern für die Herstellung von Brettsperrholzplatten, die mittels einer Keilzinkenverbindung an ihrer Stirnseite miteinander verbunden sind, verzichtet die Erfindung auf die Ausbildung von stabilen Keilzinkenverbindungen an den Stirnseiten von benachbarten Brettabschnitten, welche in Längsrichtung zur Ausbildung eines Längsbretts hintereinander angelegt werden. Statt der aus dem Stand der Technik bekannten Keilzinkenverbindung liegen die Stirnkanten der Brettabschnitte bei der erfindungsgemäßen Brettsperrholzplatte im Stumpfstoß aneinander. Dies geht zwar zu Lasten der Stabilität und der Biegesteifigkeit der unter Verwendung solcher Längsbretter hergestellten Brettsperrholzplatte. Durch die versetzte Anordnung der Stumpfstöße in Längsrichtung der Brettsperrholzplatte wird allerdings dennoch eine ausreichende Stabilität und Biegesteifigkeit der erfindungsgemäßen Brettsperrholzplatte erzielt, so dass diese zumindest dann eingesetzt werden kann, wenn keine hohen Stabilitäten und Biegesteifigkeiten erforderlich sind. Die erfindungsgemäße Brettsperrholzplatte kann beispielsweise zur Herstellung von nicht tragenden Außen- oder Innenwänden im Holzbau verwendet werden.

Durch den Verzicht auf Keilzinkenverbindungen bei der Ausbildung von Längsbrettern aus mehreren Brettabschnitten ist die Herstellung der erfindungsgemäßen Brettsperrholzplatte im Vergleich zu den bekannten Brettsperrhölzern wesentlich vereinfacht und es können Brettsperrholzplatten mit Längen im Bereich von mehr als 10 m und insbesondere bis zu 25 m hergestellt werden. Bei der Herstellung der erfindungsgemäßen Brettsperrholzplatte werden insbesondere keine Maschinen zur Ausbildung von Keilzinkenverbindungen benötigt, wodurch beispielsweise die Herstellung von erfindungsgemäßen Brettsperrholzplatten in Zimmereien ermöglicht wird.

Zweckmäßig werden die Brettabschnitte der beiden Decklagen aus parallel besäumten Brettern, insbesondere Schnittholzbrettern, gebildet, die zur Ausbildung der jeweiligen Decklage in Längsrichtung sowie in Querrichtung hinter- bzw. nebeneinander angeordnet werden. Zur Erzielung einer hohen Stabilität werden die durch mehrere hintereinander gelegte Brettabschnitte ausgebildete Längsbretter in Querrichtung ohne Abstand zueinander nebeneinander angelegt, sodass eine zwischenraumfreie Decklage entsteht.

Zwischen den beiden Decklagen ist mindestens eine Mittellage ausgebildet. Wenn nur eine Mittellage zwischen den Decklagen vorgesehen ist, ist diese aus Querbrettern gebildet, welche quer zu den Längsbrettern der Decklagen und bevorzugt ohne Abstand zueinander verlegt und mit den Längsbrettern der darunter und der darüber angeordneten Decklage verbunden werden, beispielsweise durch Verkleben bzw. Verleimen. Die Verbindung von aufeinanderliegenden Brettlagen der erfindungsgemäßen Brettsperrholzplatte kann jedoch auch auf andere Weise, beispielsweise mittels Verbindungsmittel wie Nägel oder Schrauben erfolgen.

Die Querbretter der Mittellage müssen dabei nicht zwangsläufig senkrecht zu den Längsbrettern der Decklagen verlaufen. Es ist auch möglich, dass die Holzbretter der einen Mittellage, die zwischen den beiden Decklagen angeordnet ist, schrägwinklig, beispielsweise unter einem 45°-Winkel, zu den Längsbrettern der beiden Decklagen verlaufen.

Weiterhin ist es möglich, mehrere Mittellagen zwischen den beiden Decklagen anzuordnen, wobei zweckmäßig eine ungerade Anzahl von Mittellagen vorgesehen ist. So können beispielsweise fünf- oder siebenlagige Brettsperrholzplatten ausgebildet werden. Die zwischen den Decklagen angeordneten Mittellagen umfassen dabei mindestens zwei Mittellagen, die aus Querbrettern gebildet sind, wobei diese Mittellagen aus Querbrettern benachbart zu den aus Längsbrettern gebildeten Decklagen angeordnet und mit diesen verbunden sind. Zweckmäßig werden die mehreren Mittellagen kreuzweise aufeinandergelegt und miteinander verbunden. Auch bei der Ausbildung von mehreren aufeinanderliegenden Mittellagen ist es möglich, dass die Holzbretter von benachbarten Mittellagen nicht senkrecht sondern schrägwinklig zueinander verlaufen.

Zweckmäßig sind auch die aus Längsbrettern zusammengesetzten Mittellagen aus mehreren, in Längsrichtung verlaufende Brettabschnitte zusammengesetzt, welche an ihren Stirnkanten ebenfalls - wie die Längsbretter der Decklagen - im Stumpfstoß aneinander liegen. Dabei sind die Stumpfstöße von in Querrichtung nebeneinander angeordneten Längsbrettern der Mittellagen versetzt zueinander angeordnet. Dadurch wird die Stabilität der Brettsperrholzplatte erhöht.

Die Stabilität und Biegesteifigkeit der erfindungsgemäßen Brettsperrholzplatte kann ferner erhöht werden, wenn die Stumpfstöße von in Tiefenrichtung der Brettsperrholzplatte übereinander angeordneten Längsbrettern wiederum in Längsrichtung versetzt zueinander angeordnet sind.
Die Stumpfstöße von Längsbrettern der beiden Decklagen und/oder von Längsbrettern einer aus Längsbrettern gebildeten Mittellage können dabei im rechten Winkel zur Längsrichtung verlaufen. Eine Verbesserung der Steifigkeit und der Stabilität der Brettsperrholzplatte lässt sich jedoch erzielen, wenn zumindest die Stumpfstöße von Längsbrettern der beiden Decklagen und zweckmäßig auch die Stumpfstöße von Längsbrettern einer aus Längsbrettern gebildeten Mittellage spitzwinklig zur Längsrichtung (also nicht senkrecht zur Längsrichtung) verlaufen. Vorteilhaft ist dabei ein Winkel zwischen 30° und 60° und insbesondere von 45° zwischen den Stumpfstößen (bzw. den Stirnkanten der Brettabschnitte, die ein Längsbrett mit Stumpfstoß bilden) und der Längsrichtung.

Eine einfache Handhabung und Verarbeitbarkeit der erfindungsgemäßen Brettsperrholzplatten kann ermöglicht werden, wenn die Breite der Brettsperrholzplatte (in Querrichtung) weniger als 2 m und beispielsweise 125 cm beträgt. Platten mit einer Breite von 125 cm können beispielsweise in Zimmereien problemlos verarbeitet werden, um beispielsweise individuell auf den jeweiligen Verwendungszweck zugeschnittene Bauteile herzustellen.

Die Länge der Brettsperrholzplatten gemäß der Erfindung (Ausdehnung in Längsrichtung) kann dabei weit über die Längen von verfügbaren Holzbrettern hinausgehen, welche typischerweise bei 3 bis 6 m liegt. So können beispielsweise Brettsperrholzplatten gemäß der Erfindung in Längen zwischen 10 m und 25 m und insbesondere von 15 m, 18 m oder 24 m gefertigt werden.

Die Decklagen und die Mittellagen weisen jeweils eine vorgegebene Dicke auf, die zweckmäßig zwischen 10 mm und 40 mm liegt. Zur Verbesserung der Stabilität und Biegesteifigkeit der Brettsperrholzplatte trägt bei, wenn der Abstand der Stumpfstöße von in Querrichtung benachbarten Längsbrettern in Längsrichtung gesehen ein Mehrfaches der Dicke der Längsbretter aufweist, beispielsweise mindestens das Fünffache oder Zehnfache der Dicke der Längsbretter.

Die Dicke der Decklagen und die Dicken der Mittellagen können jeweils gleich groß oder auch unterschiedlich sein. Insbesondere können die Mittellagen dünner als die Decklagen ausgebildet sein.

Zur Verbesserung der Handhabbarkeit der Längsbretter bei der Herstellung der erfindungsgemäßen Brettsperrholzplatte ist es zweckmäßig, die Stirnkanten der Brettabschnitte, welche zur Ausbildung eines Längsbretts in Längsrichtung hintereinander angelegt werden, im Bereich ihrer Stumpfstöße miteinander zu verbinden, beispielsweise durch Verkleben oder mittels Verbindungsmittel wie Nägel, Klammern oder Schrauben. Durch die Verbindung der Stumpfstöße an den Stirnkanten der Brettabschnitte können die aus mehreren Brettabschnitten gebildeten Längsbretter bei der Herstellung der erfindungsgemäßen Brettsperrholzplatte einfacher transportiert und zur Ausbildung der Brettlagen aufgelegt werden.

Diese und weitere Vorteile der Erfindung ergeben sich aus den nachfolgend unter Bezugnahme auf die begleitenden Zeichnungen näher beschriebenen Ausführungsbeispielen. Die Zeichnungen zeigen:
- **Fig.1:**: Darstellung einer ersten Ausführungsform einer erfindungsgemäßen Brettsperrholzplatte in einer Draufsicht (Fig.1a) , einem Längsschnitt (Fig. 1b) und einem Querschnitt (Fig.1c);
- **Fig.2:**: Darstellung einer zweiten Ausführungsform einer erfindungsgemäßen Brettsperrholzplatte in einer Draufsicht (Fig.2a), einem Längsschnitt (fig.2b) und einem Querschnitt (Fig.2c);
- **Fig.3:**: Längsschnitt durch eine weitere Ausführungsform einer erfindungsgemäßen Brettsperrholzplatte;
- **Fig.4:**: Draufsicht auf eine Decklage einer weiteren Ausführungsform einer erfindungsgemäßen Brettsperrholzplatte in einem Ausschnitt.

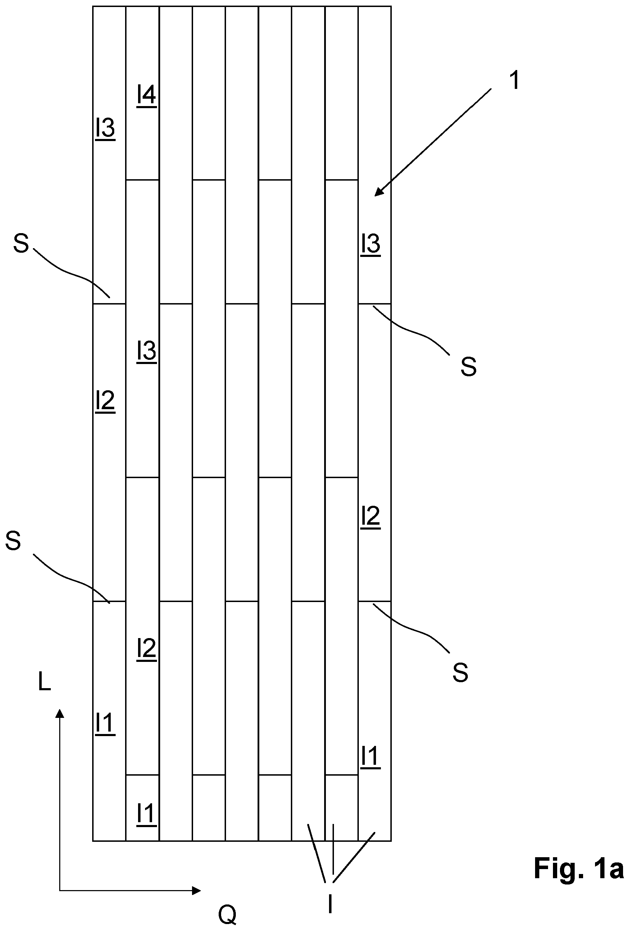

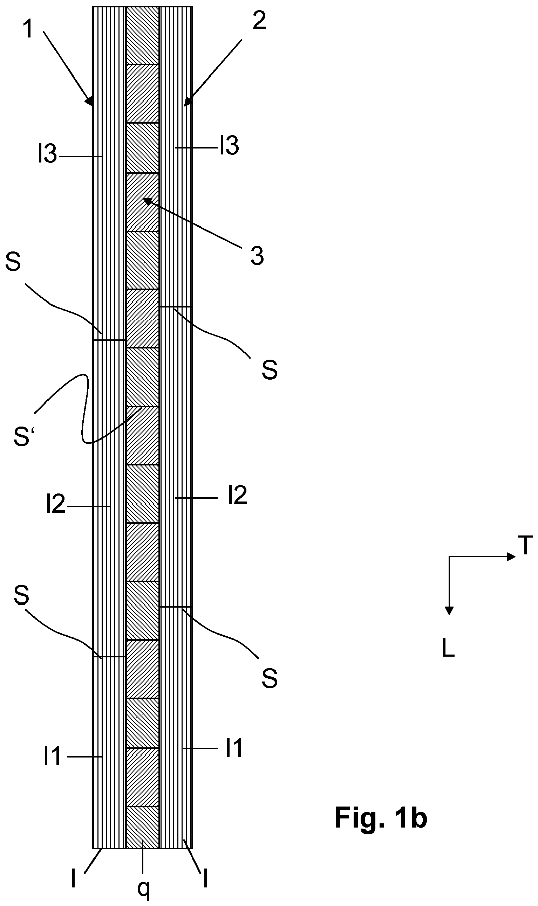

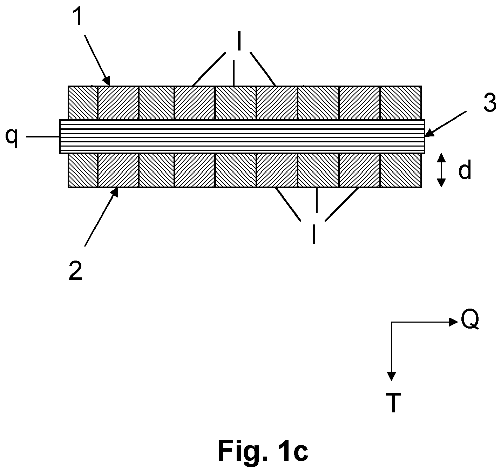

In Fig.1 ist eine erste Ausführungsform einer erfindungsgemäßen Brettsperrholzplatte gezeigt, welche als dreilagige Platte mit einer ersten Decklage 1, einer zweiten Decklage 2 und einer dazwischen angeordneten Mittellage 3 ausgebildet ist. Die drei Lagen 1 - 3 der Brettsperrholzplatte sind dabei kreuzweise übereinander gelegt. Die beiden Decklagen 1, 2 sind jeweils aus nebeneinander liegenden Längsbrettern 1 gebildet, die in Längsrichtung L verlaufen und in Querrichtung Q ohne Abstand aneinander angelegt sind. Die Mittellage 3 ist durch eine Mehrzahl von in Längsrichtung L hintereinander angelegten Querbrettern q gebildet, die in Querrichtung Q verlaufen. Die Querbretter q können dabei ohne Abstand oder auch mit einem Abstand in Längsrichtung zwischen benachbarten Querbrettern q verlegt sein. Die Bretter von übereinander liegenden Lagen der Brettsperrholzplatte sind miteinander verbunden, bspw. durch Verkleben bzw. Verleimen oder mittels Verbindungsmittel wie Nägel oder Schrauben.

Wie aus der Draufsicht der Fig. 1a ersichtlich, sind die Längsbretter 1 der ersten Decklage 1 durch mehrere, in Längsrichtung L hintereinander angelegte Brettabschnitte L1, L2, L3, L4 zusammengesetzt. Benachbarte Brettabschnitte L1, L2; L2, L3 liegen dabei an ihren Stirnkanten in einem Stumpfstoß S aneinander, wodurch eine Stoßfuge gebildet wird. Die Stumpfstöße S der Decklage 1 sind dabei so angeordnet, dass sie in Querrichtung Q versetzt zueinander verlaufen. In dem in Fig.1 a gezeigten Ausführungsbeispiel fluchten die in Querrichtung Q verlaufenden Stumpfstöße S jedes zweiten Längsbretts 1 miteinander und die Stumpfstöße S von in Querrichtung Q benachbarten Längsbrettern 1 sind zueinander versetzt. Die zweite Decklage 2 ist entsprechend der ersten Decklage 1 ausgebildet.

Der Längsschnittdarstellung von Fig. 1b ist zu entnehmen, dass die Stumpfstöße (Stoßfugen) S der ersten Decklage 1 und die Stumpfstöße (Stoßfugen) S der zweiten Decklage 2 in Tiefenrichtung T der Brettsperrholzplatte ebenfalls versetzt zueinander angeordnet sind, d.h. die Stumpfstöße S der ersten Decklage 1 und der zweiten Decklage 2 liegen nicht in einer Flucht (in Tiefenrichtung T der Platte) übereinander . Zweckmäßig sind die Stumpfstöße S der beiden Decklagen 1, 2 dabei auch versetzt zu den Stoßfugen S' der Querbretter q der Mittellage 3 versetzt.

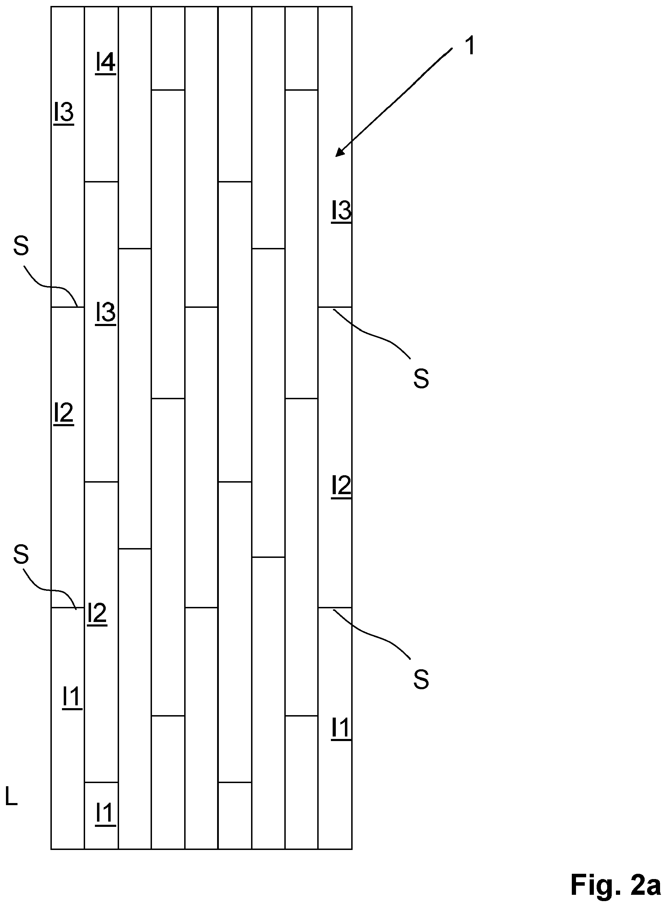

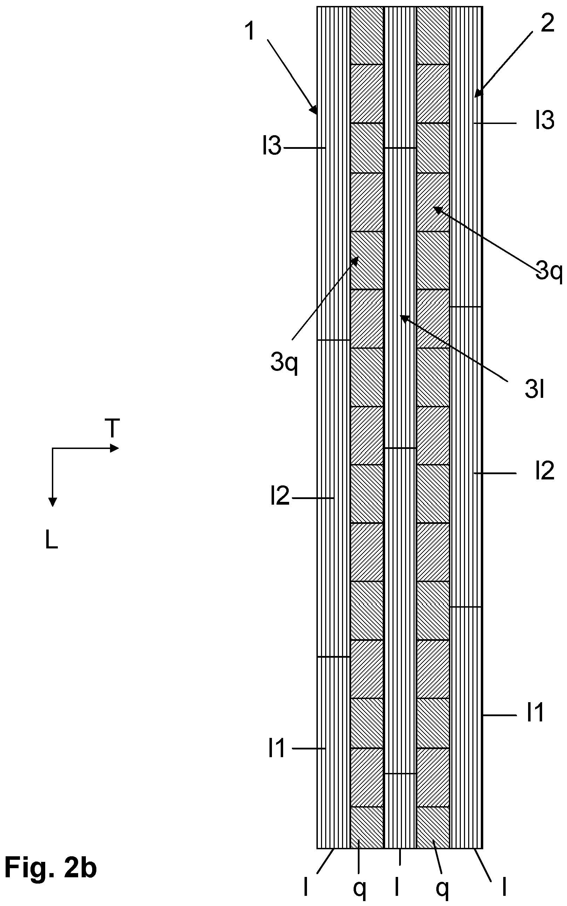

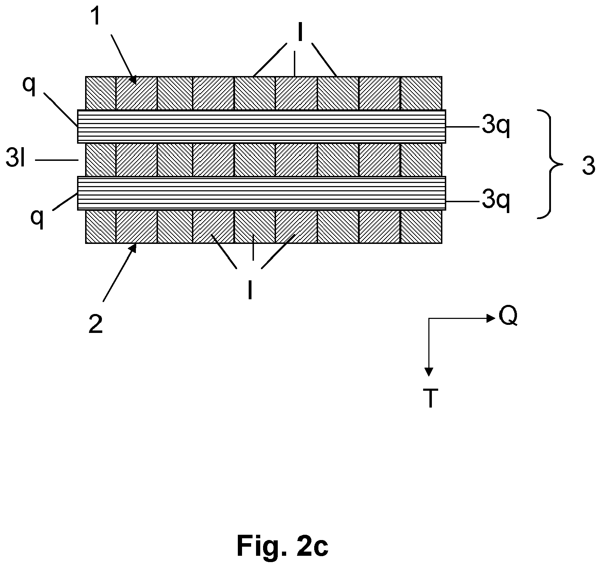

In Fig. 2 ist eine zweite Ausführungsform einer erfindungsgemäßen Brettsperrholzplatte gezeigt, welche als fünflagige Platte ausgebildet ist. Die fünflagige Brettsperrholzplatte des Ausführungsbeispiels von Fig. 2 umfasst eine erste Decklage 1 und eine zwei Decklage 2 sowie drei zwischen den beiden Decklagen 1, 2 angeordnete Mittellagen 3, die mit 3q, 31, 3q bezeichnet sind. Die zu den beiden Decklagen 1, 2 benachbarten Mittellagen 3q sind dabei jeweils aus in Längsrichtung L nebeneinander angeordnete Querbretter q gebildet. Die zwischen diesen beiden Mittellagen 3q aus Querbrettern liegende Mittellage 31 ist - wie die beiden Decklagen 1, 2 - aus Längsbrettern 1 gebildet, welche in Querrichtung Q ohne Abstand zueinander nebeneinander angeordnet sind. Die Bretter von benachbarten Lagen der Brettsperrholzplatte von Fig.2 sind wiederum miteinander verbunden, insbesondere verklebt, bzw. verleimt.

Wie in dem Ausführungsbeispiel von Fig. 1 sind auch bei der Brettsperrholzplatte des Ausführungsbeispiels von Fig. 2 die Längsbretter 1, welche die beiden Decklagen 1, 2 bilden, durch mehrere in Längsrichtung L hintereinander liegende Brettabschnitte L1, L2, L3 zusammengesetzt. Benachbarte Brettabschnitte L1, L2; L2, L3 liegen dabei ebenso wie in dem Ausführungsbeispiel von Fig. 1 an ihren Stirnkanten im Stumpfstoß S aneinander. In gleicher Weise ist auch die aus Längsbrettern 1 gebildete Mittellage 31 aus mehreren Brettabschnitten L1, L2, L3 zusammengesetzt, welche an ihren Stirnkanten im Stumpfstoß S aneinander liegen. Wie in dem Ausführungsbeispiel von Fig. 1 sind die Stumpfstöße S der Längsbretter 1 dabei sowohl in Querrichtung Q als auch in Tiefenrichtung T versetzt zueinander angeordnet, d. h. die Stumpfstöße S von in Querrichtung Q benachbarten Längsbrettern 1 fluchten nicht miteinander, ebenso wie die Stumpfstöße S von in Tiefenrichtung T übereinander liegenden Längsbrettern 1.

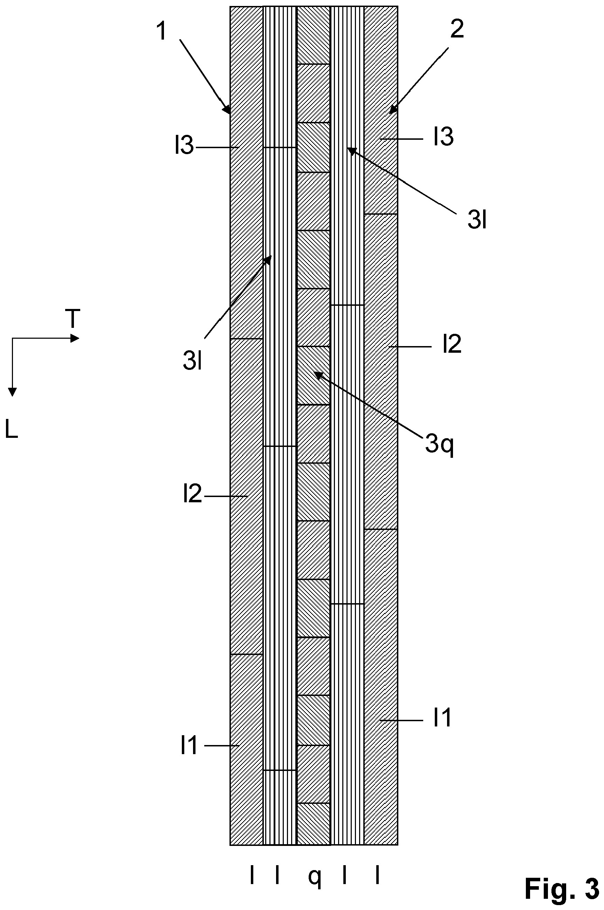

In Fig. 3 ist eine weitere Ausführungsform einer erfindungsgemäßen Brettsperrholzplatte in einem Längsschnitt gezeigt. In dieser Ausführungsform umfasst die Brettsperrholzplatte eine erste Decklage 1 und eine zweite Decklage 2 sowie drei dazwischen angeordnete Mittellagen 31, 3q, 31. Die zu den beiden Decklage 1, 2 benachbarten Mitteillagen 31 sind dabei aus Längsbrettern 1 gebildet, welche in Querrichtung Q ohne Abstand aneinander angelegt sind. Sowohl die Längsbretter 1 der beiden Decklagen 1, 2 als auch die Längsbretter 1 der benachbart zu den beiden Decklagen 1, 2 liegenden Mittellagen 31 sind dabei jeweils aus mehreren Brettabschnitten L1, L2, L3 zusammengesetzt, die in Längsrichtung L hintereinander angelegt und an ihren Stirnkanten im Stumpfstoß S aneinander liegen. Wie in den Ausführungsbeispielen der Fig. 1 und 2 sind auch hier die Stumpfstöße S von benachbarten Längsbrettern 1 sowohl in Querrichtung Q als auch in Tiefenrichtung T versetzt zueinander angeordnet, so dass die Stumpfstöße S von benachbarten Längsbrettern 1 nicht miteinander fluchten.

Die Brettabschnitte L1, L2, L3, L4 aus denen die Längsbretter 1 der Brettsperrholzplatten der oben beschriebenen Ausführungsbeispiele zusammengesetzt sind, weisen zweckmäßig eine Länge von 1m bis 6m auf. Die Dicken der für die Ausbildung der Decklagen 1, 2 und der Mittellagen 3 verwendeten Bretter liegen zweckmäßig zwischen 10 und 40 mm. Bevorzugt sind die Dicken der beiden Decklagen 1, 2 und ggf. auch der Mittellagen 3 gleich zueinander. Es ist jedoch auch möglich, die Dicken der Mittellagen 3 unterschiedlich zueinander und/oder unterschiedlich zu den Dicken der Decklagen 1, 2 auszubilden.

Die Längen der erfindungsgemäßen Brettsperrholzplatten liegen zweckmäßig zwischen 10 dun 25m und können bspw. in standardisierten Längen von 15, 18 und 24m zur Verfügung gestellt werden. Eine die Verarbeitbarkeit der erfindungsgemäßen Brettsperrholzplatten vereinfachende Breite (Ausdehnung der Brettsperrholzplatte in Querrichtung Q) liegt zweckmäßig bei 1,25m.

Zur Verbindung von übereinander liegenden Lagen (Decklagen 1, 2 und Mittellagen 3) werden bei der Herstellung der erfindungsgemäßen Brettsperrholzplatten zunächst die Lagen kreuzweise aufeinander gelegt, wobei zwischen benachbarten Lagen eine Leimschicht aufgetragen wird. Diese Anordnung wird zur Herstellung einer festen Verbindung zwischen den Lagen der Brettsperrholzplatte in einer Verleimpresse verpresst. An ihren Längskanten werden die einzelnen Bretter einer Lage dabei nicht miteinander verklebt.

Aus Gründen der besseren Handhabbarkeit bei der Herstellung einer Brettsperrholzplatte ist es jedoch zweckmäßig, die Brettabschnitte L1, L2, L3, welche zur Ausbildung eines Längsbretts 1 verwendet werden, an ihren Stirnkanten, d. h. im Bereich ihrer Stumpfstöße S, miteinander zu verbinden, bspw. durch Verkleben bzw. Verleimen oder mittels Verbindungsmittel wie Nägel, Klammern oder Schrauben. Eine Verbindung der Brettabschnitt L1, L2, L3 an ihren Stirnkanten verbessert zudem die Stabilität der aus den so zusammengesetzten Längsbrettern 1 ausgebildeten Lagen (Decklagen 1, 2 bzw. Mittellagen 31).

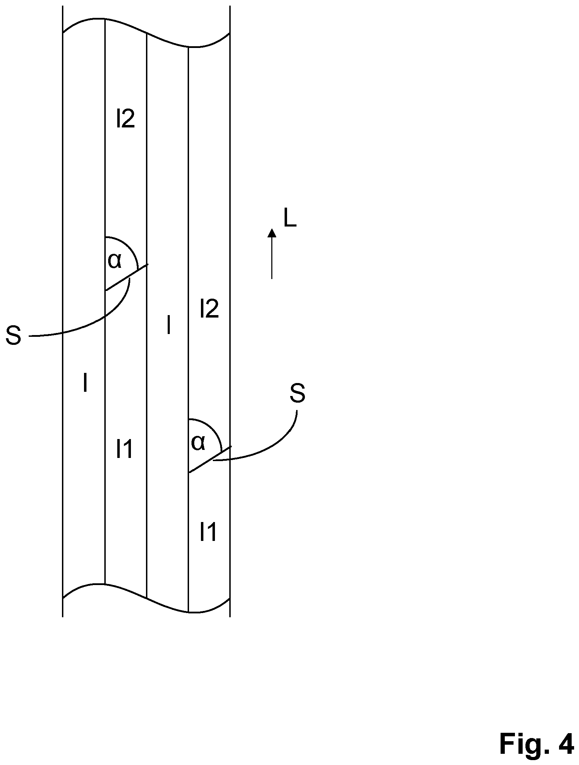

In den Ausführungsbeispielen der Figuren 1 bis 3 verlaufen die Stumpfstöße S jeweils rechtwinklig zur Längsrichtung L, d.h. die Stirnkanten der Brettabschnitte 11, 12, 13 14, die ein Längsbrett 1 mit Stumpfstoß S bilden verlaufen senkrecht zur Längsrichtung L. Die Steifigkeit und der Stabilität der Brettsperrholzplatte lässt sich jedoch noch weiter verbessern, wenn zumindest die Stumpfstöße von Längsbrettern der beiden Decklagen und zweckmäßig auch die Stumpfstöße S von Längsbrettern 1 einer aus Längsbrettern gebildeten Mittellage 31 schräg zur Längsrichtung L (also nicht senkrecht zur Längsrichtung) verlaufen. Vorteilhaft ist bspw. ein Winkel zwischen 30° und 60° und insbesondere von 45° zwischen den Stumpfstößen S und der Längsrichtung L. In Figur 4 ist ein Ausschnitt einer Draufsicht auf eine Decklage 1 einer erfindungsgemäßen Brettsperrholzplatte im Bereich eines Stumpfstoßes eines Längsbretts 1 gezeigt, wobei der Stumpfstoß S einen spitzen Winkel α mit der Längsrichtung L einschließt, d.h. die den Stumpfstoß S ausbildenden Stirnkanten der beiden Brettabschnitte 11, 12 des Längsbretts verlaufen unter einem spitzen Winkel α zu den Längskanten der Längsbretter 1 und damit auch spitzwinklig zur Längsrichtung L. In dem Beispiel der Figur 4 beträgt der Winkel α = 45°.

## Patentansprüche

1. Brettsperrholzplatte mit einer ersten Decklage (1), einer zweiten Decklage (2) und mindestens einer dazwischen angeordneten Mittellage (3), wobei die Decklagen (1, 2) jeweils aus Brettlagen mit einer Mehrzahl von in einer Querrichtung (Q) nebeneinander angeordneten und in einer Längsrichtung (L) verlaufenden Längsbrettern (1) und mindestens eine Mittellage (3q) durch quer oder schräg zur Längsrichtung (L) verlaufende Querbretter (q) gebildet sind, **dadurch gekennzeichnet, dass** sich die Längsbretter (1) der ersten Decklage (1) und der zweiten Decklage (2) jeweils aus mehreren, in Längsrichtung (L) verlaufenden Brettabschnitten (11, 12, 13) zusammen setzen, wobei benachbarte Brettabschnitte (11, 12; 12, 13) an ihren Stirnkanten im Stumpfstoß (S) aneinander liegen und die Stumpfstöße (S) von in Querrichtung (Q) nebeneinander angeordneten Längsbrettern (1) in Längsrichtung (L) versetzt zueinander angeordnet sind.

2. Brettsperrholzplatte nach Anspruch 1, **dadurch gekennzeichnet, dass** die Brettabschnitte (11, 12, 13) der Decklagen (1, 2) aus parallelbesäumten Brettern gebildet sind, welche zur Bildung der jeweiligen Decklage (1, 2) in Längsrichtung (L) und in Querrichtung (Q) ohne Abstand hinter- bzw. nebeneinander angeordnet sind, um eine zwischenraumfreie Decklage (1, 2) zu bilden.

3. Brettsperrholzplatte nach Anspruch 1 oder 2, **dadurch gekennzeichnet, dass** zwischen den Decklagen (1, 2) eine Mehrzahl von Mittellagen (3q, 31) angeordnet ist, wobei jeweils benachbart zu einer Decklage (1, 2) eine aus Querbrettern (q) gebildete Mittellage (3q) angeordnet ist.

4. Brettsperrholzplatte nach einem der voranstehenden Ansprüche, **dadurch gekennzeichnet, dass** die Mittellagen (3) mindestens eine aus Längsbrettern (1) gebildete Mittellage (31) umfassen, wobei jede aus Längsbrettern (1) gebildete Mittellage (31) zwischen zwei aus Querbrettern (q) gebildete Mittellagen (3q) angeordnet ist.

5. Brettsperrholzplatte nach Anspruch 4, **dadurch gekennzeichnet, dass** sich die oder jede aus Längsbrettern (1) gebildete Mittellage (31) aus mehreren, in Längsrichtung (L) verlaufenden Brettabschnitten (11, 12, 13) zusammen setzt, wobei benachbarte Brettabschnitte (11, 12; 12, 13) an ihren Stirnkanten im Stumpfstoß (S) aneinander liegen und die Stumpfstöße (S) von in Querrichtung (Q) nebeneinander angeordneten Längsbrettern (1) versetzt zueinander angeordnet sind.

6. Brettsperrholzplatte nach Anspruch 5, **dadurch gekennzeichnet, dass** die Stumpfstöße (S) von in Tiefenrichtung (T) der Brettsperrholzplatte übereinander angeordneten Längsbrettern (1) in Längsrichtung (L) versetzt zueinander angeordnet sind.

7. Brettsperrholzplatte nach einem der Ansprüche 3 bis 5, **dadurch gekennzeichnet, dass** zwischen den Decklagen (1,2) eine ungerade Anzahl von Mittellagen (3q, 31) angeordnet ist.

8. Brettsperrholzplatte nach einem der voranstehenden Ansprüche, **dadurch gekennzeichnet, dass** übereinander angeordnete Lagen (1,3; 2,3) miteinander verbunden sind, insbesondere durch Verkleben.

9. Brettsperrholzplatte nach einem der voranstehenden Ansprüche, **dadurch gekennzeichnet, dass** die Stirnkanten der Brettabschnitte (11, 12, 13) im Bereich der Stumpfstöße (S) abstandsfrei aneinander liegen, so dass eine spaltfreie Stoßfuge ausgebildet ist.

10. Brettsperrholzplatte nach einem der voranstehenden Ansprüche, **dadurch gekennzeichnet, dass** die Stirnkanten der Brettabschnitte (11, 12, 13) im Bereich der Stumpfstöße (S) miteinander verbunden, insbesondere verklebt sind.

11. Brettsperrholzplatte nach einem der voranstehenden Ansprüche, **dadurch gekennzeichnet, dass** die Stumpfstöße (S) von Längsbrettern (1) der ersten Decklage (1) und der zweiten Decklage (2) und/oder von Längsbrettern (1) einer aus Längsbrettern gebildeten Mittellage (31) schräg, insbesondere spitzwinklig zur Längsrichtung (L) verlaufen.

12. Brettsperrholzplatte nach einem der voranstehenden Ansprüche, **dadurch gekennzeichnet, dass** die Stumpfstöße (S) von Längsbrettern (1) der ersten Decklage (1) und der zweiten Decklage (2) und/oder von Längsbrettern (1) einer aus Längsbrettern gebildeten Mittellage (31) unter einem Winkel (a) von 30° bis 60° zur Längsrichtung (L) verlaufen.

13. Brettsperrholzplatte nach einem der voranstehenden Ansprüche, **dadurch gekennzeichnet, dass** die Stumpfstöße (S) von Längsbrettern (1) der ersten Decklage (1) und der zweiten Decklage (2) und/oder von Längsbrettern (1) einer aus Längsbrettern gebildeten Mittellage (31) unter einem Winkel (a) von 45° zur Längsrichtung (L) verlaufen.
